Europäisches Patentamt

European Patent Office

Office européen des brevets

(11) Publication number: **0 253 557 B1**

(12) **EUROPEAN PATENT SPECIFICATION**

(45) Date of publication of patent specification: **23.01.91**

(51) Int. Cl.⁵: **B 60 C 13/00**

(21) Application number: **87306012.3**

(22) Date of filing: **08.07.87**

(54) **Tyre sidewalls.**

(30) Priority: **16.07.86 GB 8617409**

(43) Date of publication of application:
**20.01.88 Bulletin 88/03**

(45) Publication of the grant of the patent:
**23.01.91 Bulletin 91/04**

(84) Designated Contracting States:
**DE ES FR GB IT**

(56) References cited:
**EP-A-0 101 399**
**DE-A-2 640 343**
**GB-A-2 010 755**

(73) Proprietor: **SP TYRES UK LIMITED**
**Fort Dunlop**
**Erdington Birmingham B24 9QT (GB)**

(72) Inventor: **Simpson, Mathew**
**156 Swan Gardens**
**Erdington Birmingham B23 6QQ (GB)**
Inventor: **Blake, Andrew Mark**
**45 Whitemoore Drive**
**Shirley Solihull B94 4OL (GB)**

(74) Representative: **Stewart, Charles Geoffrey**
**SP TYRES UK LIMITED Tyre Technical Division**
**Fort Dunlop Erdington Birmingham B24 9QT**
**(GB)**

Courier Press, Leamington Spa, England.

## Description

This invention relates to tyre sidewalls and to a means of improving the legibility of sidewall numbers or letters.

Tyre sidewalls are subjected to constant flexure and sidewall materials are specially designed to withstand this without cracking and consequent failure. Any pattern or shape moulded into the surface inevitably provides sources of potential cracks and so efforts have been made to provide increased clarity of sidewall markings by specially shaped grooves of shallow depth.

A typical system corresponding to the preamble of claim 1 is shown in GB—A—2010755 where special cross sections for the grooves are disclosed to improve the contrast available for markings. Such a system is effective but has limitations as much grooving is often required which provides very many potentiazl crack initiation points although they are of course very shallow.

The object of this invention is to provide the legibility of sidewall letters or numbers whilst reducing the amount of grooving and thus to reduce the potential failure sites on the sidewall.

According to the present invention a tyre sidewall is provided having a sidewall with at least one letter or number presented thereon the letter or number is delineated by means of a series of closely-spaced, parallel, shallow grooves formed in the sidewall surface which grooves extend in a substantially radial direction of the tyre sidewall and all said grooves lie outside the said letter or number which is itself not grooved.

By grooves is meant grooves formed into the sidewall or ribs formed to provide grooves therebetween.

The grooves may be provided all around said letter or number but more preferably the grooves extend only throughout an apparent depth zone of the letter or number.

By apparent depth zone is meant the area which appears beneath it when the letter or number is lifted substantially from the sidewall surface and the sidewall is viewed at an angle. Said zone is similar to the shadow zone of the letter or numeral if lit from a point directly above the letter.

Preferably, the apparent depth zone is substantially equal to the width of the line forming the letter or numeral to provide the smallest possible grooves area whilst giving effective delineation of the letter.

The letter or number may also be delineated by a single raised rib having a height from the sidewall of not more than 1 mm and a width of not more than 3.0 mm.

All the grooves are preferably less than 1 mm in depth and preferably between 0.8 and 0.5 mm in depth. The grooves may be of various cross sectional shapes but a preferred cross section is a triangular section with an apex of said triangle at the deepest point of the groove.

The present invention will be apparent from the following description, by way of example only, of one embodiment in conjunction with the attached diagrammatic drawings in which:

Fig. 1 shows a side view of a sector of a tyre sidewall with the letters SP thereon.

Fig. 2 is a cross section of part of one of the letters on the sidewall of Fig. 1.

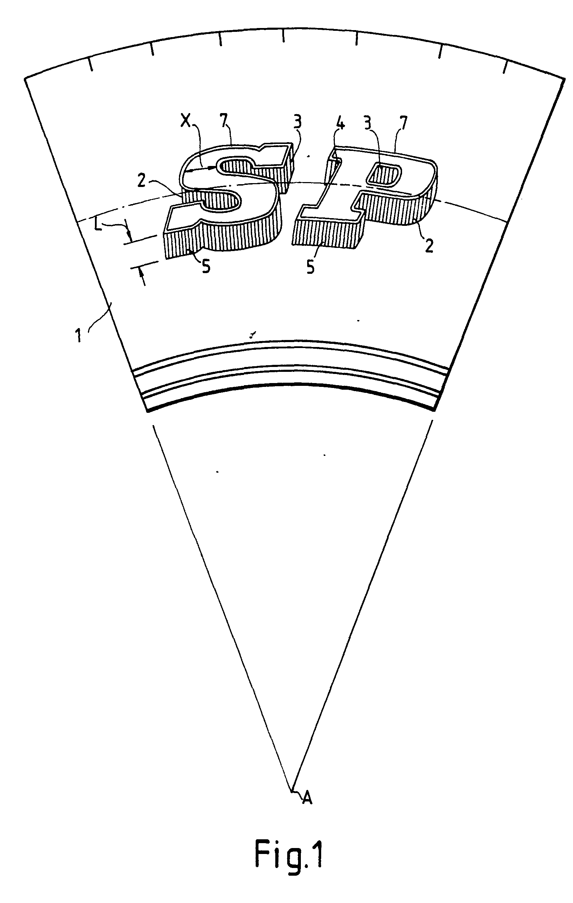

The letters SP shown in Fig. 1 are delineated, from the basic tyre sidewall 1 by shaded areas 2 to 5. The shaded areas 2—5 are positioned to give the visual appearence that the letters themselves are raised above the tyre sidewall surface by a substantial distance. In fact the shaded areas cover the area that would be in shadow if the letters were raised from the sidewall, illuminated perpendicularly to their own surface and then viewed from a side angle or perspective viewpoint. This shadow area is referred to herein as the apparent depth zone.

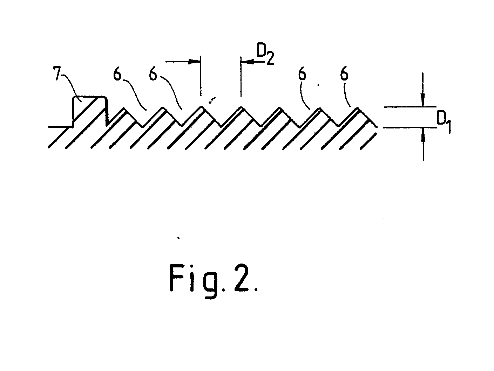

The shaded areas each comprise a closely spaced set of parallel grooves 6 which are formed in the tyre sidewall as shown in Fig. 2. Each groove 6 has a triangular cross-section, a depth D1 of only 0.5 mm and a width D2 at the tread surface of 1.5 mm. Thus the grooves are very shallow compared with the normal groove depth for standard markings. An important feature is the direction of the grooves 6 which is the radial direction of the tyre. Fig. 1 shows a sector of a tyre and this has a central axis at the point A. Each letter S and P then has its grooves 6 lying in the radial direction. For a satisfactory appearance and clarity of letters or numerals the inventors have found the grooves should be within 10 degrees of the radial direction. In addition the groove length L is substantially equal to or less than the width X of the line forming the letters.

This shading means gives letters or numbers which are particularly clear and distinctive to the human eye but secondary means of delineation may additionally be used. The secondary means comprises a 0.8 mm high and 0.8 mm wide rib of sidewall material 7 around the edge of each letter. This shallow rib above does not make the letters distinct but when added to the unexpectedly clear picture by the radial grooves give an enhanced clarity for the letters or numerals.

The invention is particularly useful for large sidewall markings such as Trade Marks or Trade Names. It allows very large characters to be used whilst providing the very small area of only very shallow grooves and thus gives clearly marked tyres without incurring sidewall weakening features. It is particularly effective for normal black tyre sidewalls as the narrow grooves provide good reflectivity and contrast. Nevertheless, its use is not limited to only black sidewalls nor indeed is the groove section limited to triangular.

## Claims

1. A tyre having a sidewall (1) with at least one letter or number presented thereon, the letter or number being delineated by means of a series of closely-spaced, parallel, shallow grooves (6) formed in the sidewall surface, characterized in that said grooves (6) extend in a substantially radial direction of the tyre sidewall (1) and all said grooves (6) lie outside the said letter or number which is itself not grooved.

2. A tyre according to claim 1 characterised in that the series of radially extending grooves (6) extends only throughout an apparent depth zone (2, 5) of the said letter or numeral as herein defined.

3. A tyre according to claim 1 or 2, characterised in that the grooves (6) are of similar length to the width of the line being delineated for said letter or numeral.

4. A tyre according to claim 1, 2 or 3 characterised in that the said letter or number is further delineated by a single raised rib (7) having a height from the sidewall surface of less than 1.0 mm and a width not more than 3.0 mm.

5. A tyre according to any one of claims 1—4 characterised in that the grooves are less than 1.0 mm in depth.

6. A tyre according to claim 5 characterised in that the grooves (6) are between 0.5 and 0.8 mm in depth.

7. A tyre according to claim 5 or 6 characterised in that the grooves (6) are triangular in cross section with an apex at the defined part of the groove.

**Patentansprüche**

1. Reifen mit einer Seitenwand (1) mit mindestens einem daran angebrachten Buchstaben oder einer solchen Ziffer, der bzw. die mittels einer Reihe eng benachbart parallel in der Seitenwandfläche ausgebildeter flacher Nuten (6) abgegrenzt ist, dadurch gekennzeichnet, daß die Nuten (6) sich in einer im wesentlichen radialen Richtung der Reifenseitenwand (1) erstrecken und alle Nuten (6) außerhalb des Buchstabens oder der Ziffer liegen, der bzw. die selbst nicht genutet ist.

2. Reifen nach Anspruch 1, dadurch gekennzeichnet, daß die Reihe sich radial ersteckender Nuten (6) sich nur durch eine scheinbar in die Tiefe gehende Zone (2, 5) des Buchstabens oder der Ziffer, wie hier definiert, hindurch erstreckt.

3. Reifen nach Anspruch 1 oder 2, dadurch gekennzeichnet, daß die Nuten (6) von zur Breite der den Buchstaben oder die Ziffer abgrenzenden Linie gleichartiger Länge sind.

4. Reifen nach Anspruch 1, 2 oder 3, dadurch gekennzeichnet, daß der Buchstabe oder die Ziffer weiter durch eine einzige erhabene Rippe abgegrenzt ist mit einer Höhe von weniger als 0,1 mm von der Seitenwandfläche und einer Breite von nicht mehr als 3,0 mm.

5. Reifen nach einem der Ansprüche 1—4, dadurch gekennzeichnet, daß die Nuten von einer Tiefe von weniger als 1 mm sind.

6. Reifen nach Anspruch 5, dadurch gekennzeichnet, daß die Nuten (6) von einer Tiefe zwischen 0,5 und 0,8 mm sind.

7. Reifen nach Anspruch 5 oder 6, dadurch gekennzeichnet, daß die Nuten (6) von dreickigem Querschnitt sind mit einem Scheitel im definierten Teil der Nut.

**Revendications**

1. Pneumatique comportant un flanc (1) sur lequel se trouve au moins une lettre ou un chiffre, cette lettre ou ce chiffre étant tracé au moyen d'une série de rainures peu profondes (6), parallèles, très proches l'une de l'autre, formées dans la surface du flanc, caractérisé par le fait que lesdites rainures (6) s'étendent selon une direction sensiblement radiale du flanc (1) du pneumatique et par le fait que toutes lesdites rainures (6) se trouvent à l'extérieur de ladite lettre ou dudit chiffre qui n'est lui-même pas rainuré.

2. Pneumatique selon la revendication 1, caractérisé par le fait que la série de rainures (6) qui s'étend radialement ne s'étend que sur une zone de profondeur apparente (2, 5) de ladite lettre ou dudit chiffre tel que défini ici.

3. Pneumatique selon la revendication 1 ou 2, caractérisé par le fait que les rainures (6) sont de longueur semblable à la largeur du trait qui trace ladite lettre ou ledit chiffre.

4. Pneumatique selon la revendication 1, 2 ou 3, caractérisé par le fait que ladite lettre ou ledit chiffre est en outre tracé par une unique rainure surélevée (7) dont la hauteur, au-dessus de la surface du flanc, est inférieure à 1,0 mm et dont la largeur est inférieure à 3,0 mm.

5. Pneumatique selon l'une quelconque des revendications 1—4, caractérisé par le fait que les rainures ont une profondeur inférieure à 1,0 mm.

6. Pneumatique selon la revendication 5, caractérisé par le fait que les rainures (6) ont une profondeur entre 0,5 et 0,8 mm.

7. Pneumatique selon la revendication 5 ou 6 caractérisé par le fait que les rainures (6) ont une section droite de forme triangulaire avec un sommet à la partie la plus profonde de la rainure.

Fig.1

Fig. 2.